Europäisches Patentamt

(19) European Patent Office

Office européen des brevets

(11) Numéro de publication: **0 240 429**
**B1**

## FASCICULE DE BREVET EUROPEEN

(12)

(45) Date de publication du fascicule du brevet:
08.08.90

(21) Numéro de dépôt: **87400719.8**

(22) Date de dépôt: **01.04.87**

(51) Int. Cl.⁵: **F23C 11/04**

(54) Chaudière à gaz de combustion pulsatoire.

(30) Priorité: **04.04.86 FR 8604834**

(43) Date de publication de la demande:
**07.10.87 Bulletin 87/41**

(45) Mention de la délivrance du brevet:
**08.08.90 Bulletin 90/32**

(84) Etats contractants désignés:
**AT BE CH DE ES GB GR IT LI LU NL SE**

(56) Documents cités:
**EP-A- 0 157 372**
**WO-A-84/02762**
**US-A- 2 701 950**
**US-A- 3 286 728**

(73) Titulaire: **SOCIETE NATIONALE ELF AQUITAINE Société anonyme dite, Tour Elf 2, Place de la Coupole La Défense 6, F-92400 Courbevoie(FR)**
Titulaire: **MARECK B.V., Museumplein 11, NL-1071 DJ Amsterdam(NL)**

(72) Inventeur: **Bader, Jean-Marc, Taluyers, F-69440 Mornant(FR)**

(74) Mandataire: **Levy, David et al, c/o S.A. Fedit-Loriot 38, avenue Hoche, F-75008 Paris(FR)**

**Description**

La présente invention concerne une chaudière à gaz comprenant une chambre de combustion pulsatoire en carburant et en comburant, dans laquelle le mélange carburant-comburant est introduit d'une manière intermittente au moyen d'une vanne à clapet.

Dans la demande de brevet français 8 404 921 du 29 avril 1984 déposé au nom de la demanderesse, il est décrit plusieurs dispositifs d'alimentation de la chambre de combustion pulsatoire, en mélange carburant-comburant. Dans chacun des dispositifs décrits, le comburant, en l'occurrence de l'air, est introduit, dans la chambre de combustion, à travers des orifices inclinés, ménagés dans une plaque supérieure, tandis que le carburant, du fuel par exemple, est injecté de manière continue par un gicleur ou tête d'injection qui est vissé dans un alésage ménagé dans la plaque supérieure.

Dans un mode de réalisation, un clapet est prévu entre la face interne de la plaque supérieure et un siège de clapet qui est fixé au col de la chambre de combustion.

Dans un autre mode de réalisation, plusieurs clapets sont prévus mobiles en translation à l'intérieur de plots de centrage fixés à la plaque supérieure. Dans tous les cas, le ou les clapets sont appliqués sur la plaque supérieure lorsqu'après la première explosion, la pression dans la chambre de combustion devient supérieure à la pression d'injection de l'air.

De ce fait, lorsque la chaudière est à l'arrêt et/ou pour de faibles pressions régnant dans la chambre de combustion, le ou les clapets sont ouverts et de l'air est introduit dans la chambre de combustion pulsatoire. De plus, et en raison de la structure même des clapets et de la plaque supérieure, il est difficile de diminuer le temps d'ouverture du clapet pendant le fonctionnement. En effet, l'application de deux surfaces planes, celle des clapets sur la surface en regard de la plaque supérieure nécessite une plus grande pression lors de l'admission de l'air dans la chambre de combustion pulsatoire.Enfin, il est à noter qu'un mélange comburant-carburant est peu aisé à réaliser.

On connaît par le document WO 84/02762 une chaudière à gaz comprenant une chambre de combustion pulsatoire d'un mélange de constituants air-gaz, un col à la partie supérieure de ladite chambre de combustion comportant une surface horizontale et un corps fixé au col, des moyens d'allumage et aptes à produire l'explosion du mélange air-gaz dans ladite chambre de combustion et des moyens d'alimentation des constituants dudit mélange et comprenant de plus une vanne à clapet montée entre la face interne du corps et la surface horizontale du col, ladite vanne comportant un siège de clapet de forme annulaire qui est fixé sur le col et un clapet sous la forme d'une couronne souple, déformable et appliqué contre le siège de clapet lorsque la chaudière est à l'arrêt. Mais le carburant est introduit dans la chambre de combustion par un injecteur central. Le mélange comburant-carburant est donc peu aisé à réaliser.

De plus, le document US-A 3 286 728 décrit une vanne à clapet comprenant un siège de clapet et un clapet, dans laquelle:
– le clapet est souple, déformable et appliqué contre le siège de clapet lorsque la vanne n'est pas en fonction:
– le siège de clapet comprend au moins deux gorges dont une dite de décollement qui sert à éviter le collage dudit clapet sur ledit siège;
– des portées sont ménagées sur le siège de clapet et entre les gorges; et
– au moins deux des portées sont situées dans un même plan et une portée extrême est située dans un plan horizontal non supérieur à celui comportant les autres portées.

La présente invention a pour but de remédier aux inconvénients précités et a pour objet de proposer une vanne à clapet qui n'utilise qu'un clapet, aussi bien pour l'admission de chacun des composants du mélange que pour l'admission d'un mélange effectué en amont de la chambre de combustion pulsatoire.

A cet effet, la chaudière conforme à l'invention est du type précité et est caractérisée en ce que:
a) le clapet est unique pour les deux constituants,
b) le siège de clapet comprend au moins deux gorges dont une première de décollement qui sert à éviter le collage dudit clapet sur ledit siège et dont la seconde communique avec des moyens d'alimentation des constituants du mélange et
c) en ce que des portées concentriques sont ménagées sur le siège de clapet autour et entre les gorges et qu'au moins deux desdites portées sont situées dans un même plan horizontal et que la portée extrême la plus éloignée du col est située dans un plan horizontal non supérieur à celui comportant les autres portées.

Le clapet unique étant fermé à l'arrêt, de l'air ne peut être admis dans la chambre de combustion, tout au moins tant que la pression d'air n'est pas suffisante pour repousser le clapet hors de son siège.

Grâce à la structure souple du clapet, ce dernier est translaté verticalement sur une très faible distance, puis se déforme dans la partie en regard des moyens d'admission des composants du mélange, et revient élastiquement vers la position de fermeture dès l'arrêt de l'admission.

D'autres avantages et caractéristiques ressortiront à la lecture de la description donné ci-dessous à titre indicatif, mais non limitatif de deux modes de réalisation préférés de l'invention, ainsi que des dessins annexés sur lesquels:

la figure 1 est une vue en coupe de la valve à clapet selon l'invention montée dans une chambre de combustion de révolution dont seule une partie de la moitié droite est représentée;

la figure 2 est une vue partielle du clapet sur son siège suivant un autre mode de réalisation selon l'invention.

Une chambre de combustion pulsatoire (1) d'une chaudière à gaz par exemple comprend un col (2) qui peut présenter toute forme appropriée comme celle représentée sur la figure unique, ou encore celle de la demande de brevet rappelée précédemment, ledit col (2) comportant une surface horizontale (3). Une enceinte remplie d'eau refroidit la chambre de combustion (1). Un corps (5) est fixé au col (2) par tout moyen de fixation et comprend un alésage (6) pour le passage d'une bougie (7) ou tout autre moyen équivalent pour l'obtention d'une explosion d'un mélange comburant-carburant introduit dans la chambre de combustion pulsatoire (1). On pourrait utiliser également une bougie disposée horizontalement.

Dans l'intervalle (8) ménagé entre la face interne (5a) du corps (5) et la surface horizontale (3) sont montés un clapet souple et élastique (9) et un siège de clapet (10) qui est fixé sur le col (2) au moyen de vis de fixation (11), l'étanchéité état obtenue au moyen de joints d'étanchéité (12) prévus à cet effet dans le corps (5) et le col (2) de la chambre (1).

Le clapet (9) se présente sous la forme d'une couronne très légère réalisée dans un matériau suffisamment élastique pour qu'une déformation locale puisse être obtenue. Le siège (10) comprend un certain nombre d'orifices (13) pour l'admission de l'air, qui débouchent dans une gorge annulaire (13a) et qui sont répartis circonférentiellement autour de l'axe de révolution du siège. D'autres orifices (14) pour l'admission du gaz sont également ménagés dans le siège (10) et débouchent dans une gorge annulaire (14a). La répartition et le nombre des orifices (13) et (14) sont choisis en fonction du volume de mélange souhaité dans la chambre de combustion (1). De préférence, les gorges annulaires (13a) et (14a) sont proches l'une de l'autre de façon que le mélange air-gaz s'effectue le plus vite possible dans la chambre de combustion. Une gorge annulaire (19) est également ménagée dans le siège (10) et présente des dimensions supérieures à celles des gorges (13a) et (14a). La gorge (19) est éloignée de la partie de la chambre de combustion où se produit le mélange de façon à ne pas perturber ledit mélange, tout en autorisant un déplacement du clapet (9) vers le haut dès qu'une faible pression s'exerce sur la face du clapet, côté admission, pour autant que ladite faible pression soit supérieure à celle régnant dans l'intervalle (8) de la chambre de combustion (1).

Les orifices (13) et (14) communiquent respectivement avec des passages (15) et (16) ménagés dans le col (2). Le passage (15) est relié à une source d'air tandis que le passage (16) qui est en réalité une enceinte d'un certain volume, est relié à une source de gaz.

L'enceinte (16) est séparée du passage (15) par une cloison (20).

La face interne (5a) du corps (5) est légèrement inclinée du centre vers la périphérie du façon que l'intervalle (8) soit plus faible vers l'extrémité droite, sur la figure. De ce fait, le clapet (9) a un faible débattement dans cette zone réduite et sa course de déplacement est, en conséquence, réduite.

En fonctionnement, par suite de l'admission d'un des composants du mélange, comburant ou carburant, ou les deux, dans les passages (15) ou (16) et les orifices correspondants (13) ou (14), le clapet (9) est soulevé sensiblement verticalement jusqu'à ce que le bord externe (30a) du clapet (9) vienne en appui sur la surface interne (5a) du corps (5). S'il y a lieu, le clapet (9), grâce à son élasticité, est susceptible de se déformer lorsque la pression du composant introduit est relativement plus importante que celle régnant dans l'espace (8). Lorsque la pression régnant dans la chambre de combustion (1) augmente, après combustion du mélange, le clapet (9) se ferme très rapidement du fait de la faible course qu'il doit parcourir, et en raison de l'accélération produite par l'effet de son élasticité qui joue le rôle d'un ressort. Il en est de même, à l'état de repos, c'est-à-dire que lorsqu'aucune pression n'est exercée sur l'une des faces du clapet (9), ce dernier reste appliqué contre le siège (10).

Dans l'exemple représenté, le mélange comburant-carburant est effectué dans une partie de la chambre de combustion (1). On pourrait tout aussi bien effectuer le mélange des composants avant leur admission dans la chambre de combustion, par exemple, en ménageant un orifice (21) dans la paroi de séparation (20) de manière à introduire le gaz dans le passage (15). Le mélange air-gaz s'effectue alors dans le passage (15) et il est introduit dans la chambre de combustion (1) à travers l'orifice (13).

Des portées concentriques (30 à 33) sont ménagées autour des et entre les gorges (13a), (14a), et (19). Les portées (31) et (32) sont très importantes car c'est entre ces portées et le clapet que l'étanchéité est obtenue au moment des explosions. Pour réduire les fuites autant que faire se peut, on réalise ces portées de façon qu'elles soient dans un même plan horizontal, dépourvues de rayures ou de porosité et sans possibilité de se déformer au moment du serrage du couvercle sur le corps de vanne. Quant à la portée extrême (30), elle doit présenter les mêmes caractéristiques que les autres portées, mais peut être située dans un plan horizontal légèrement inférieur afin de favoriser le placage du clapet sur le siège. Il va de soi qu'en aucun cas, la portée (30) ne doit être plus haute que les deux autres (31) à (33).

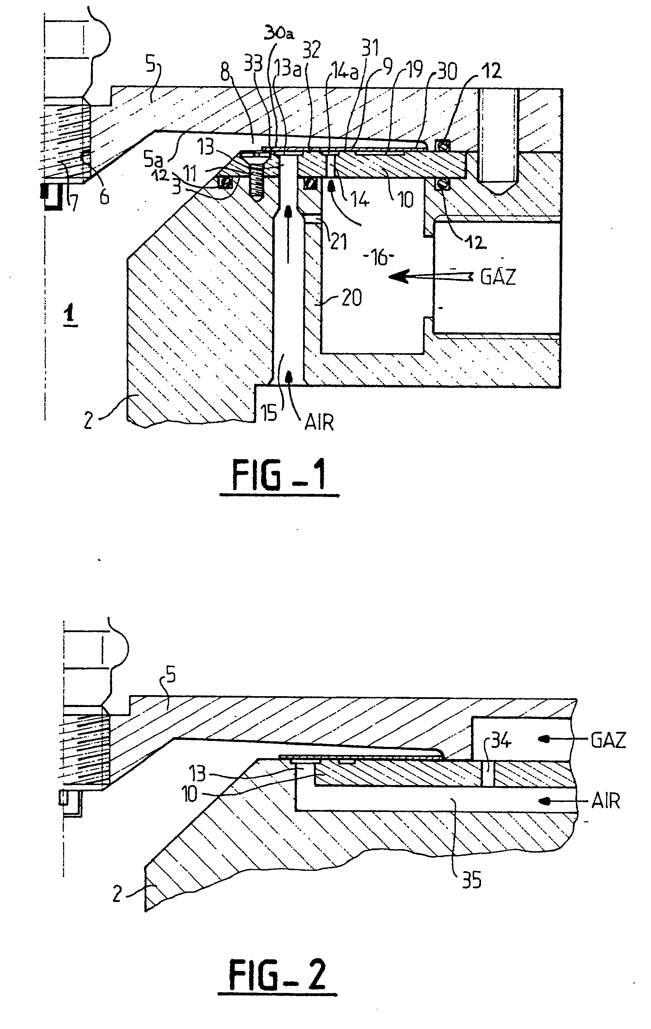

Dans le mode de réalisation représenté sur la figure 2, l'arrivée de gaz est ménagée dans le corps supérieur (5) à travers un passage (34) qui débouche dans un conduit d'amenée d'air (35) ménagé dans le siège (10) ou dans tout autre élément approprié, de façon que le mélange air-gaz soit effectué dans ledit conduit (35) avant d'être introduit dans la chambre de combustion (1) à travers l'orifice (13).

Dans ce qui précède, on a fait référence à un clapet homogène et présentant des caractères physiques appropriés quant à la légèreté et à la souplesse pour obtenir les déformations souhaitées. Mais on pourrait également utiliser un clapet à rigidité différentielle, de préférence dont la rigidité serait croissante depuis le centre vers la périphérie, une telle rigidité pouvant être obtenue soit par la forme de la section du clapet, soit par la nature interne du matériau composite utilisé pour la fabrication dudit clapet. L'épaisseur du clapet, à la périphérie, pourrait être sensiblement du même ordre du grandeur que celle de l'espace ménagé entre le couvercle (5) et le siège du clapet (10), du côté de la portée (30). Dans ces conditions, lorsqu'une faible force s'exerce sur le clapet, lors de l'admission d'un constituant dans la gorge (13a), la partie du clapet en regard, qui est très souple, se soulève légèrement pour laisser ledit constituant s'introduire dans l'intervalle (8). L'ouverture complète du clapet s'effectuerait après déformation totale du clapet et libération d'une section de passage suffisant. Quant à la fermeture, elle s'effectuerait par effet de rappel dû à l'élasticité introduite dans le clapet par suite de la rigidité différentielle existante.

**Revendications**

1. Chaudière à gaz comprenant une chambre de combustion pulsatoire (1) d'un mélange de constituants air-gaz, un col (2) à la partie supérieure de ladite chambre de combustion comportant une surface horizontale (3) et un corps (5) fixé au col, des moyens (7) d'allumage et aptes à produire l'explosion du mélange air-gaz dans ladite chambre de combustion et des moyens (15, 16) d'alimentation des constituants dudit mélange et comprenant de plus une vanne à clapet (9) montée entre la face interne du corps et la surface horizontale du col, ladite vanne comportant un siège (10) de clapet de forme annulaire qui est fixé sur le col (2) et un clapet (9) sous la forme d'une couronne souple, déformable et appliqué contre le siège (10) de clapet lorsque la chaudière est à l'arrêt, caractérisée en ce que
   a) le clapet (9) est unique pour les deux constituants,
   b) le siège de clapet (10) comprend au moins deux gorges (19; 13a, 14a) dont une première (19) de décollement qui sert à éviter le collage dudit clapet (9) sur ledit siège (10) et dont la seconde (13a, 14a) communique avec des moyens (15, 16) d'alimentation des constituants du mélange et
   c) des portées concentriques (30, 31, 32, 33) sont ménagées sur le siège de clapet autour des et entre les gorges (19, 13a, 14a), au moins deux (31, 32) desdites portées sont situées dans un même plan horizontal et la portée extrême (30) la plus éloignée du col est située dans un plan horizontal non supérieur à celui comportant les autres portées.

2. Chaudière selon la revendication 1, caractérisée en ce que le siège (10) comprend une troisième gorge, les seconde et troisième gorges (13a, 14a) communiquant avec les moyens d'alimentation (15, 16) de l'un et l'autre constituant du mélange.

3. Chaudière selon la revendication 1, caractérisée en ce que la seconde gorge (13a) communique avec des moyens d'alimentation du mélange des constituants.

4. Chaudière selon l'une des revendications 1 à 3, caractérisée en ce que la gorge de décollement (19) est éloignée de la partie de la chambre (1) dans laquelle se produit l'explosion du mélange.

5. Vanne à clapet selon l'une quelconque des revendications 1 à 4, caractérisée en ce que la portée extrême (30) la plus éloignée du col (2) est située dans un plan horizontal légèrement inférieur à celui comportant les autres portées (31 à 33).

**Claims**

1. A gas boiler comprising a combustion chamber (1) for pulsewise combustion of a mixture of constituents, air and gas, a throat (2) at the top part of the said combustion chamber having a horizontal surface (3) and a body (5) fixed to the throat, ignition means (7) suitable for producing the explosion of the air/gas mixture in the said combustion chamber and means (15, 16) for feeding the constituents of the said mixture, and further comprising a valve leaf (9) mounted between the inside surface of the body and the horizontal surface of the throat, said valve having an annular valve leaf seat (10) which is secured to the throat (2) and a leaf (9) in the form of a flat ring which is flexible, deformable and is pressed against the valve leaf seat (10) when the boiler is not operating, characterized in that :
   a) there is a single valve leaf (9) for both constituents;
   b) the valve leaf seat (10) comprises at least two grooves (19; 13a, 14a), the first of these grooves being an anti-stick groove (19) which serves to prevent the said leaf (9) from sticking to the said seat (10), and the second (13a, 14a) of these grooves communicating with feed means (15, 16) for supplying the mixture constituents;
   c) concentric bearing surfaces (30, 31, 32, 33) are provided on the valve leaf seat around and between the grooves (19; 13a, 14a) at least two (31, 32) of the said bearing surfaces being located in a same horizontal plane, and the outermost bearing surface (30) which is the furthest from the throat (2) being located in a horizontal plane not higher than the one which includes the other bearing surfaces.

2. A gas boiler according to claim 1, characterized in that the seat (10) has a third groove, the second and third grooves (13a, 14a) communicating with the feed means (15, 16) of either constituents of the mixture.

3. A gas boiler according to claim 1, characterized in that the second groove (13a) communicates with feed means of the mixture of constituents.

4. A gas boiler according to one of claims 1 to 3, characterized in that the anti-stick groove (19) is located at some distance from that portion of the chamber (1) in which the mixture explodes.

5. A gas boiler according to one of claims 1 to 4, characterized in that the outermost bearing surface (30) which is the furthest from the throat (2) is located in a horizontal plane that is slightly lower than the one which includes the other bearing surfaces (31 to 33).

**Patentansprüche**

1. Gasheizkessel mit einer Kammer (1) zur schwingenden Verbrennung eines Gas-Luftgemisches, einem Hals (2) im oberen Teil der genannten Verbrennungskammer, welcher eine horizontale Fläche (3) und einen am Hals befestigten Körper (5) umfaßt, eine Zündeinrichtung (7) durch die das Gas-Luftgemisch in der Verbrennungskammer gezündet werden kann, und Einrichtungen (15, 16) zur Zufuhr der Bestandteile des genannten Gemisches, und weiters mit einem zwischen der Innenseite des Körpers und der horizontalen Fläche des Halses montierten Klappenventil (9), wobei das genannte Ventil aus einem am Hals (2) befestigten ringförmigen Klappensitz (10) und einer Klappe (9) in Form eines weichen, deformierbaren Ringes besteht, der bei außer Betrieb befindlichem Kessel am Klappensitz (10) anliegt, dadurch gekennzeichnet, daß

a) die Klappe (9) den beiden Bestandteilen gemeinsam ist,

b) der Klappensitz (10) mindestens zwei Rillen (19; 13a, 14a) aufweist, von denen eine erste Abheberille (19) dazu dient, ein Anhaften der Klappe (9) an dem Sitz (10) zu vermeiden, und von denen die zweite Rille (13a, 14a) mit Einrichtungen (15, 16) zur Zufuhr der Bestandteile des Gemisches in Verbindung steht, und

c) auf dem Sitz rund um die Rillen (19, 13a, 14a) und zwischen diesen konzentrische Auflageflächen (30, 31, 32, 33) vorgesehen sind, wobei mindestens zwei (31, 32) der genannten Auflageflächen in ein und derselben Horizontalebene angeordnet sind und die vom Hals am weitesten entfernte äußerste Auflagefläche (30) in einer Horizontalebene angeordnet ist, die nicht höher liegt als die die anderen Auflageflächen enthaltende Horizontalebene.

2. Heizkessel nach Anspruch 1, dadurch gekennzeichnet, daß der Sitz (10) eine dritte Rille aufweist, wobei die zweite und dritte Rille (13a, 14a) mit den Einrichtungen (15, 16) zur Zufuhr des einen und des anderen Bestandteiles des Gemisches in Verbindung stehen.

3. Heizkessel nach Anspruch 1, dadurch gekennzeichnet, daß die zweite Rille (13a) mit Einrichtungen zur Zufuhr des Gemisches der Bestandteile in Verbindung steht.

4. Heizkessel nach einem der Ansprüche 1 bis 3, dadurch gekennzeichnet, daß die Abheberille (19) von dem Teil der Kammer (1), in dem das Zünden des Gemisches stattfindet, entfernt ist.

5. Klappenventil nach irgendeinem der Ansprüche 1 bis 4, dadurch gekennzeichnet, daß die am weitesten von dem Hals (2) entfernte äußerste Auflagefläche (30) sich in einer Horizontalebene befindet, die geringfügig unterhalb der die anderen Auflageflächen (31 bis 33) enthaltenden Horizontalebene liegt.

FIG -1

FIG- 2